Europäisches Patentamt

European Patent Office

Office européen des brevets

(11) Veröffentlichungsnummer: **0 215 372**
**A2**

## (12) EUROPÄISCHE PATENTANMELDUNG

(21) Anmeldenummer: 86112155.6

(22) Anmeldetag: 02.09.86

(51) Int. Cl.⁴: **G02B 5/28**

(30) Priorität: **17.09.85 DE 3533170**

(43) Veröffentlichungstag der Anmeldung:
**25.03.87 Patentblatt 87/13**

(84) Benannte Vertragsstaaten:
**DE FR GB**

(71) Anmelder: **Siemens Aktiengesellschaft Berlin und München**
**Wittelsbacherplatz 2**
**D-8000 München 2(DE)**

(72) Erfinder: **Mahlein, Hans, F., Dr.**
**Queristrasse 2**
**D-8025 Unterhaching(DE)**

(54) **Kanten-Interferenzfilter für die optische Nachrichtenübertragung im Wellenlängenmultiplex.**

㉗ Es wird ein langwellig transmittierendes Kanten-Interferenzfilter für engen Kanalabstand beschrieben. Dieses Filter besteht aus einer Schichtenfolge aus insgesamt einundzwanzig abwechselnd höher-und niedrigerbrechenden Schichten, wobei jede höherbrechende Schicht aus $TiO_2$ und jede niedrigerbrechende Schicht aus $SiO_2$ besteht. Die einzelnen Schichten haben eine auf 20° Einfallswinkel und auf drei Viertel einer Sperrbereichsmittenwellenlänge von 823 nm normierte optische Schichtdicke, die ausgehend von einer äußeren Schicht der Schichtenfolge für die erste und zweite Schicht 0,241 bzw. 0,914 beträgt, für die dritte bis neunzehnte Schicht konstant 1 ist und für die vorletzte und letzte Schicht 0,914 bzw. 0,241 beträgt. Zu diesem Filter existiert ein Filter als spektral komplementäres Gegenstück.

**FIG 1**

auf Sperrbereichsmittenwellenlänge normierte effektive optische Schichtdicke · Einfallswinkel —20° · Brechzahl

| Schicht | Schichtdicke | Brechzahl |
|---|---|---|
| $H_1$ | 0,241 | 2,08 / 1,45 |
| $L_1$ | 0,914 | 1,45 |
| $H_2$ | 1 | 2,08 |
| $L_2$ | 1 | 1,45 |
| $H_3$ | 1 | 2,08 |
| $L_3$ | 1 | 1,45 |
| $H_4$ | 1 | 2,08 |
| $L_4$ | 1 | 1,45 |
| $H_5$ | 1 | 2,08 |
| $L_5$ | 1 | 1,45 |
| $H_6$ | 1 | 2,08 |
| $L_6$ | 1 | 1,45 |
| $H_7$ | 1 | 2,08 |
| $L_7$ | 1 | 1,45 |
| $H_8$ | 1 | 2,08 |
| $L_8$ | 1 | 1,45 |
| $H_9$ | 1 | 2,08 |
| $L_9$ | 1 | 1,45 |
| $H_{10}$ | 1 | 2,08 |
| $L_{10}$ | 0,914 | 1,45 |
| $H_{11}$ | 0,241 | 2,08 / 1,45 |

$S_1$ ... $S_2$, SF

EP 0 215 372 A2

## Kanten-Interferenzfilter für die optische Nachrichtenübertragung im Wellenlängenmultiplex

Die vorliegende Erfindung betrifft ein Kanten-Interferenzfilter für die optische Nachrichtenübertragung im Wellenlängenmultiplex nach dem Oberbegriff des Patentanspruchs 1.

Filter der genannten Art sind beispielsweise aus H.F. Mahlein: Opt. Laser Technol. 13 (1981) S. 13-20 bekannt. Für die optische Nachrichtenübertragung im Wellenlängenmultiplex werden unter gewissen Umständen Paare spektral komplementärer Kanten-Interferenzfilter benötigt. Derartige Paare sind in unverkitteter Ausführung, beispielsweise aus H.A. Macleod: Thin Film Optical Filters, Hilger, London, 1969, S. 111-153 bekannt.

Die Theorie verkitteter Kanten-Interferenzfilter - (siehe genannte Literaturstelle in Opt. Laser Technol. 13) zeigt, daß sich mit dem aus $SiO_2$ und $TiO_2$ bestehenden üblichen Schichtmaterialien kurzwellig transmittierende Filter nur für enge Kanalabstände, etwa 40 nm bei einer Wellenlänge von 1300 nm und 20° Einfallswinkel, und langwellig transmittierende Filter nur für große Kanalabstände, etwa 120 nm bei einer Wellenlänge von 1300 nm und 20° Einfallswinkel realisieren lassen.

Langwellig transmittierende Kanten-Interferenzfilter für enge Kanalabstände und kurzwellig transmittierende Filter für große Kanalabstände lassen sich dagegen mit dem bisher beschriebenen Schichtaufbau nicht realisieren.

Aufgabe der vorliegenden Erfindung ist es, ein verkittetes langwellig transmittierendes Kanten-Interferenzfilter für engen Kanalabstand anzugeben.

Diese Aufgabe wird ausgehend von einem Kanten-Interferenzfilter der eingangs genannten Art durch die im kennzeichnenden Teil des Patentanspruchs 1 angegebenen Merkmale gelöst.

Das erfindungsgemäße Filter stellt das spektral komplementäre Gegenstück zu einem bekannten kurzwellig transmittierenden verkitteten Kanten-Interferenzfilter dar. Die Schichtenfolge des erfindungsgemäßen Filters kann vorteilhafterweise mit nur zwei Schichtmaterialien aufgebaut werden und kommt mit einer relativ geringen Anzahl von Schichten aus. Es kann die Strahlung zweier Laserdioden mit den Emissionswellenlängen 840 nm und 880 nm trennen.

Die Erfindung wird anhand der Figuren in der folgenden Beschreibung näher erläutert. Von den Figuren zeigen:

Figur 1 das Kanten-Interferenzfilter in einer ausschnittsweisen Seitenansicht, und

Figur 2 das gemessene Transmissionsvermögen des Filters nach Figur 1 für unpolarisierte Strahlung und für die s-und die p-Komponente dieser Strahlung in Abhängigkeit von der Wellenlänge.

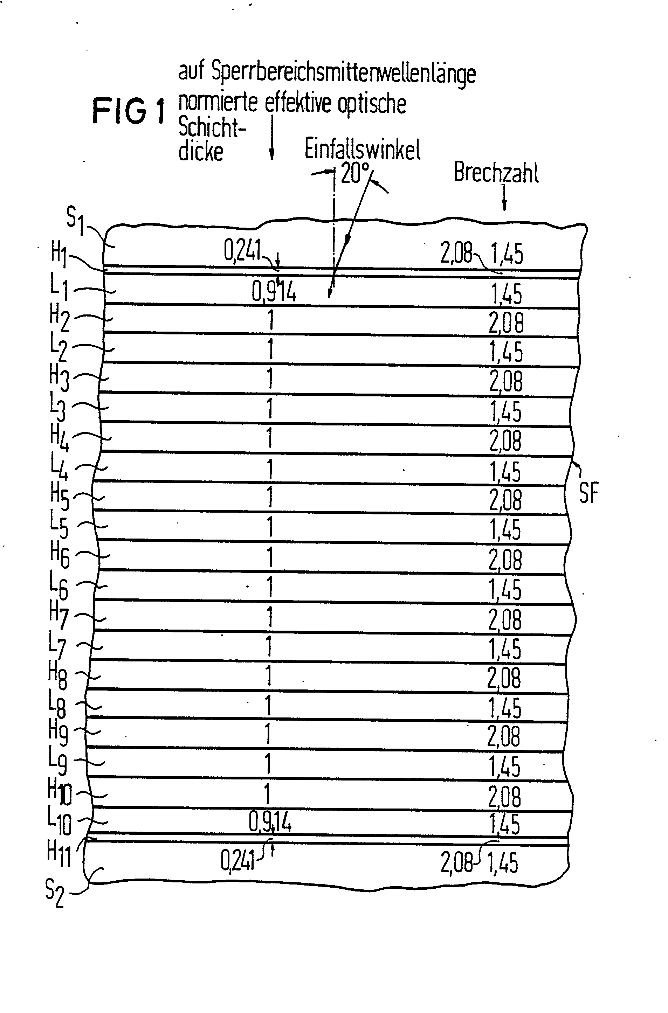

Nach Figur 1 besteht das hier vorgeschlagene Kanten-Interferenzfilter aus der zwischen angrenzenden äußeren Medien $S_1$ und $S_2$ angeordneten Schichtfolge SF aus insgesamt einundzwanzig abwechselnd höher-und niedrigerbrechenden Schichten $H_1$, $L_1$, $H_2$, $L_2$, ..., $H_{10}$, $L_{10}$ und $H_{11}$. Die beiden an die üßeren Medien $S_1$ und $S_2$ un mittelbar angrenzenden äußeren Schichten $H_1$ und $H_{11}$ der Schichtenfolge SF sind höherbrechende Schichten. Die beiden äußeren Medien $S_1$ und $S_2$ bestehen aus einem Substrat, beispielsweise einem Glasfaserkern mit der Brechzahl 1,45 ± 0,05 bzw. aus einem Superstrat, beispielsweise einem transparenten optischen Klebstoff mit der gleichen Brechzahl wie das Substrat.

Die höherbrechenden Schichten $H_1$, $H_2$,...,$H_{10}$, $H_{11}$ der Schichtenfolge SF bestehen aus einem Material der Brechzahl 2,08 ± 0,05, beispielsweise aus $TiO_2$. Die niedrigerbrechenden Schichten $L_1$, $L_2$,...,$L_{10}$ der Schichtenfolge SF bestehen aus einem Material der Brechzahl 1,45 ± 0,05, beispielsweise aus $SiO_2$, aus dem auch das Substrat oder Superstrat bestehen kann.

In der Nähe der horizontalen Mitte der Figur 1 ist für jede der Schichten $H_1$, $L_1$, $H_2$, $L_2$,...,$H_{10}$, $L_{10}$, $H_{11}$ die zugehörige, auf einen Einfallswinkel von 20° bezogene und auf drei Viertel einer Sperrbereichsmittenwellenlänge von 823 nm normierte effektive optische Schichtdicke eingetragen.

Rechts neben den Schichtdicken sind untereinander die Brechzahlen des Mediums $S_1$, der einzelnen Schichten der Schichtenfolge SF und des Mediums $S_2$ angegeben.

Danach haben die Schichten $H_1$ und $H_{11}$ jeweils eine genannte normierte Schichtdicke von 0,241, die Schichten $L_1$ und $L_{10}$ jeweils eine normierte Schichtdicke von 0,914 und die übrigen Schichten $H_2$, $L_2$, $H_3$, $L_3$,...,$H_9$, $L_9$, $H_{10}$ jeweils eine Schichtdicke von 1.

Das Filter ist von der Ordnung 1, d.h. die Dimensionierungswellenlänge beträgt 2469 nm, und die Mitte des für die Anwendung interessierenden Sperrbereichs liegt bei 823 nm. Es weist dadurch eine steile Filterkante auf.

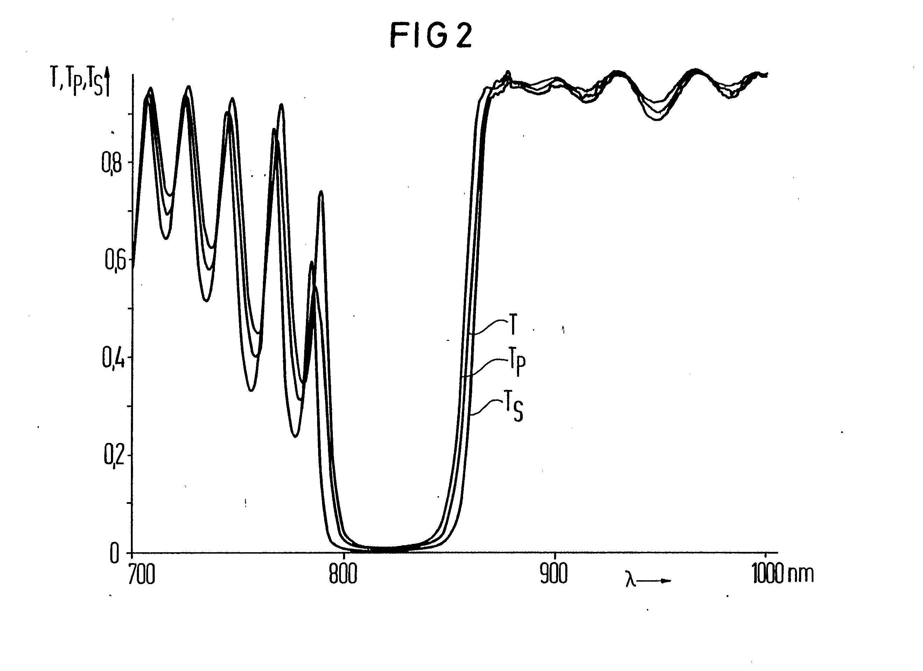

Die Figur 2 zeigt das spektrale Transmissionsvermögen T für unpolarisierte Strahlung, das Transmissionsvermögen $T_s$ für die s-Komponente, d.h. die zur Einfallsebene senkrechte Komponente der linear polarisierten Strahlung, und das Transmissionsvermögen $T_p$ für die p-Komponente, d.h. die zur Einfallsebene parallele Komponente dieser Strahlung, des Kanten-Interferenzfilters für den Einfallswinkel 20°.

Das vorliegende Filter kann auch kurz durch eine formelartige Symbolik wie folgt charakterisiert werden:

S 0,241 H 0,914 L (HL)$^8$ H 0,914 L 0,241 H S.

Dabei steht S für äußeres Medium, H für höherbrechende Schicht, L für niedrigerbrechende Schicht und eine Zahl vor H oder L gibt die oben definierte normierte Schichtdicke der betreffenden Schicht an. Eine fehlende Zahl vor H oder L bedeutet, daß die genannte Schichtdicke der betreffenden Schicht gleich 1 ist. Die Hochzahl 8 gibt an, wie oft sich die in Klammern stehende Schichtperiode aus den beiden Schichten H und L wiederholt.

## Ansprüche

Kanten-Interferenzfilter für die optische Nachrichtenübertragung im Wellenlängenmultiplex, mit einer zwischen angrenzenden äußeren Medien ($S_1$, $S_2$) angeordneten Schichtenfolge (SF) aus abwechselnd höher-und niedrigerbrechenden Schichten - ($H_1$, $L_1$, $H_2$, $L_2$,..., $H_{10}$, $L_{10}$, $H_{11}$), wobei die beiden an die äußeren Medien ($S_1$, $S_2$) mit der Brechzahl einer niedrigerbrechenden Schicht (L) angrenzenden äußeren Schichten ($H_1$, $H_{11}$) der Schichtenfolge (SF) höherbrechende Schichten sind,

**dadurch gekennzeichnet,**

daß die Schichtenfolge (SF) aus insgesamt einundzwanzig höher-und niedrigerbrechenden Schichten ($H_1$, $L_1$, $H_2$, $L_2$,..., $H_{10}$, $L_{10}$, $H_{11}$) besteht,

daß jede höherbrechende Schicht ($H_1$, $H_2$,...,$H_{10}$, $H_{11}$) aus einem Material der Brechzahl 2,08 ± 0,05 und jede niedrigerbrechende Schicht ($L_1$, $L_2$,...,$L_{10}$) aus einem Material der Brechzahl 1,45 ± 0,05 besteht, und daß die einzelnen Schichten ($H_1$, $L_1$, $H_2$, $L_2$,..., $H_{10}$, $L_{10}$, $H_{11}$) eine auf 20° Einfallswinkel und drei Viertel einer Sperrbereichsmittenwellenlänge von 823 nm bezogene normierte optische Schichtdicke haben, die ausgehend von einer äußeren Schicht ($H_1$) der Schichtenfolge (SF) und bis auf eine zulässige Abweichung von höchstens 2 % für die erste und zweite Schicht 0,241 bzw. 0,914 beträgt, für die dritte bis neunzehnte Schicht konstant 1 ist, und für die vorletzte und letzte Schicht 0,914 bzw. 0,241 beträgt.

**FIG 1**

auf Sperrbereichsmittenwellenlänge normierte effektive optische Schichtdicke

Einfallswinkel 20°

Brechzahl

| | auf Sperrbereichsmittenwellenlänge normierte effektive optische Schichtdicke | Brechzahl |
|---|---|---|
| $S_1$ | | |
| $H_1$ | 0,241 | 2,08  1,45 |
| $L_1$ | 0,914 | 1,45 |
| $H_2$ | 1 | 2,08 |
| $L_2$ | 1 | 1,45 |
| $H_3$ | 1 | 2,08 |
| $L_3$ | 1 | 1,45 |
| $H_4$ | 1 | 2,08 |
| $L_4$ | 1 | 1,45 |
| $H_5$ | 1 | 2,08 |
| $L_5$ | 1 | 1,45 |
| $H_6$ | 1 | 2,08 |
| $L_6$ | 1 | 1,45 |
| $H_7$ | 1 | 2,08 |
| $L_7$ | 1 | 1,45 |
| $H_8$ | 1 | 2,08 |
| $L_8$ | 1 | 1,45 |
| $H_9$ | 1 | 2,08 |
| $L_9$ | 1 | 1,45 |
| $H_{10}$ | 1 | 2,08 |
| $L_{10}$ | 0,914 | 1,45 |
| $H_{11}$ | 0,241 | 2,08  1,45 |
| $S_2$ | | |

SF

FIG 2

0 215 372